# EUROPEAN PATENT APPLICATION

(11) **EP 4 768 385 A1**
(43) Date of publication of application: **01.07.2026**
(21) Application number: 25184776.0
(22) Date of filing: 24.06.2025
(51) Int. Cl.: B64C 1/40

(54) **A LOAD DAMPUING APPARATUS**

(30) Priority: 30.12.2024 TR 2024021431
(71) Applicant: Tusas- Turk Havacilik Ve Uzay Sanayii Anonim Sirketi, 06980 Ankara (TR)
(72) Inventor: ERYILMAZ, Emre Onur, 06980 Ankara (TR)
(74) Representative: Berkkam, Ayfer

(57) **Abstract**

This invention relates to a body (2) in an aircraft, a cockpit (3) in the form of a cabin on the body (2), in which the pilot is located, a panel (4) located in the cockpit (3), on which the avionic devices are positioned and which is accessible to the pilot, a plurality of beams (301) forming the side walls of the cockpit (3), arranged longitudinally opposite each other so that the cockpit (3) is located between them, at least one damper (5) located in the cockpit (3), damping the loads on the panel (4) in the cockpit (3).

## Description

The present invention relates to load damping apparatus for damping vibrations or lateral loads generated in an aircraft cockpit.

In order to prevent the instrument panels placed on the cockpit of aircraft from hitting other structural parts, the displacement values of the instrument panels should be below a certain level. In the common technique, factors such as the loads on the aircraft and the weights of the equipment on the instrument panel, and the fact that the centers of gravity of these weights are not at the desired location, cause the displacement values of the instrument panels to be unequal everywhere or cannot be lowered below the required level. Certain methods are used to prevent this situation. One of them is to use vibration dampers with high stiffness value. In the aforementioned application, the structure cannot be damped as desired because the damping capacity of the vibration damper is not provided sufficiently. In addition, as the stiffness value increases, the weight of the vibration damper also increases. Another method is to design the spacers connecting the vibration dampers and the structure as thick and large as possible to connect the vibration dampers as strongly as possible. In the aforementioned application, although the structure is statically strong, it has to be designed heavier than it should be in order to meet the displacement requirements. The mentioned methods do not directly affect the regions where the displacement value is critical. Since these solutions do not act directly on the required area, it is necessary to add more weight to go below the required displacement.

The invention in the patent application document originating in the United States of America numbered US7410126B2, which is included in the known state of the art, mentions an acoustic absorber system assembly placed in the aircraft body. The said absorber is placed adjacent to the frame part of the aircraft body. The absorbing system comprises filling fibers, a soundproof blanket and a floor panel. In the space between the frame in the body, the filling fiber is first installed, then the soundproof blanket and the floor panel on top of it. Foam can also be used instead of filling fiber. The number of blanket layers in the absorbing system can be adjusted according to the waves to be absorbed.

In the invention mentioned in the patent application document originating in the United States of America with the number US20100320319A1, which is included in the known state of the art, a sandwich vibration damper structure in a layered structure is mentioned. This structure can be used in the body of an aircraft. The damper in question is located between two layers of fiber-reinforced resin. In this way, a sandwich structure is formed. The damping material layer contains a viscoelastic damping material.

A load damping apparatus developed with this invention provides lightweight and effective damping of repetitive loads that occur between the aircraft beam and the beam and the panel opposite the beam, or loads that occur during maneuvering during aircraft flight.

Another object of the present invention is to provide a damping function by means of a damping apparatus comprising high force-resistant and fatigue-resistant elements that are easily and quickly manufactured.

Another object of the present invention is to protect the aircraft structures from the fatigue effect as much as possible by damping the loads that occur only in the required direction, and to provide load carrying with a lightweight apparatus only where load is expected to occur.

The first claim of the invention and the load damping apparatus defined in the claims according to the invention, comprising a body positioned within the aircraft and a cockpit with a pilot on the body. The cockpit comprises a panel on the body on which the avionic devices are located, which is easily accessible to the pilot, and which is preferably located almost in the center of the cockpit in the direction in which the cockpit extends. There are multiple beams with cockpit sidewalls, extending opposite to each other with the cockpit between them. There is a damper inside the cockpit which absorbs any vibration or lateral loads to which the panel is subjected.

The inventive load damping apparatus comprises a damping device which is positioned on both sides of the panel between the panel and the beam, and which damps vibration or lateral loads occurring between the panel and the beam. The damper is only fixed to the surface of the beam by means of fasteners. There is a first situation (I) where the distance between the panel and the damper is less than one centimeter. There is a second situation (II) in which the panel is subjected to loads, such as vibration or lateral loads, which cause it to be displaced and come into contact with one of the dampers on either side of the panel by approaching or striking it. The damper carries the loads on the panel during the transition from the first situation (I) to the second situation (II) due to the movement of the body and prevents the damper from hitting the beam by bearing. When the damping panel is in the second situation (II), it only dampens the loads on the axis along which it extends by providing a light structure.

In one embodiment of the invention, the load damping apparatus comprises a cockpit located on the body so as to cover the cockpit, the cockpit having a closed position (K) in which the canopy is closed over the cockpit and an open position (A) in which the canopy is located on the body away from the cockpit and the cockpit is open. A hinge located on the part of the canopy which is supported on the body next to the cockpit and which allows the canopy to move from a closed position (K) to an open position (A) or from an open position (A) to a closed position (K), and a lock located on the part of the cockpit opposite the hinge which allows the canopy to be locked in the closed position (K). A first damper is located between the outer walls of the panel and the beam close to the hinge and a second damper is located between the outer walls of the panel and the beam close to the lock. On the first damper there is an inclined region which guides the linear path of the canopy in inclined form as it moves from the open position (A) to the closed position (K) or from the closed position (K) to the open position (A).

In one embodiment of the invention, the load damping apparatus comprises a plurality of equipment positioned on the panel such that the load damping apparatus is on the axis along which the panel extends upwardly from the floor, which is the base of the body. A damping device is positioned on the beam between the equipment and the panel, preferably almost side by side, at the same height as the equipment, thereby damping the load caused by the weight of the equipment on the beam and the loads caused by the effect of gravity when moving from the first situation (I) to the second situation (II).

In one embodiment of the invention, the load absorbing apparatus comprises an inclined region having an inclined form in the direction in which it extends, which enables the canopy to close softly so as to prevent rapid contact of the canopy with the panel.

In one embodiment of the invention, the load damping apparatus comprises a second damper having a shape in conformity with the outer wall of the canopy so that the canopy closes softly so as to prevent the load generated when the canopy is positioned over the cockpit and the loads generated during body flight from riding on the beam.

In one embodiment of the invention, the load damping apparatus comprises a floor-mounted panel. The first damper and the second damper act as lugs for the loads experienced by the floor-mounted panel in the second situation (II) by holding the lug only when in contact and preventing it from vibrating. In this way, the panel is prevented from hitting the beam.

In one embodiment of the invention, the load damping apparatus comprises a first damper and a second damper having a lattice structure, the walls of which are arranged in repeating unit cells, thereby preventing the formation and propagation of cracks therein, and being of lightweight design.

In one embodiment of the invention, the load damping apparatus comprises a first damper and a second damper made of a type of rubber polymer.

In one embodiment of the invention, the load damping apparatus comprises a first damper and a second damper produced by means of an additive manufacturing production method.

In one embodiment of the invention, the load damping apparatus comprises a beam, preferably an aircraft beam.

The load damping apparatus realized to achieve the purpose of the present invention is shown in the attached figures, and from these figures;

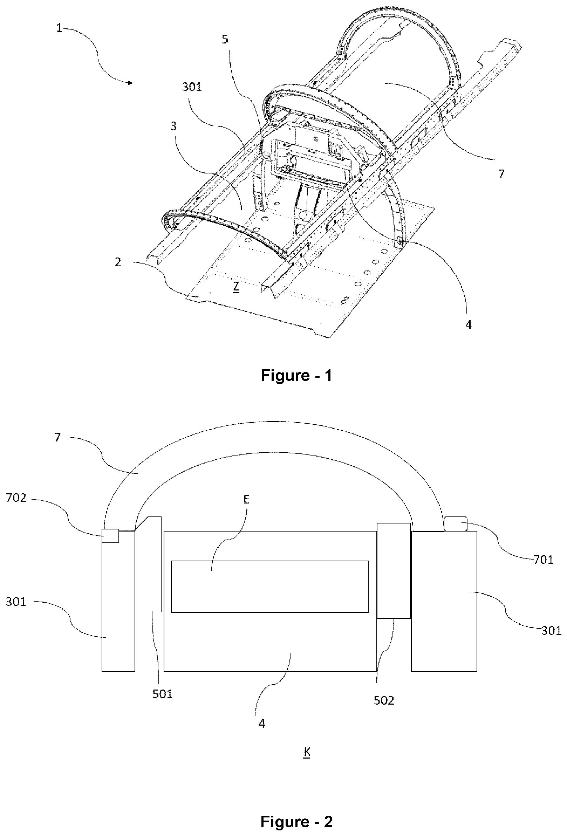

Figure 1 - Perspective view of the load damping apparatus.
Figure 2 - Schematic view of the canopy in closed position (K).

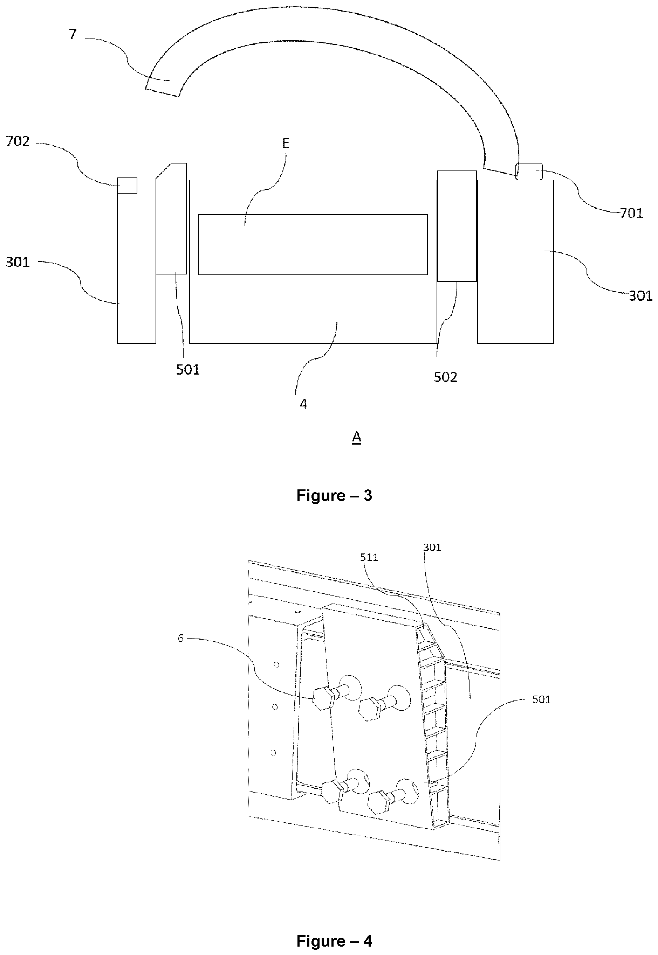

Figure 3 - Schematic view of the canopy in open position (A).
Figure 4- Schematic view of the beam, first damper, inclined region and stabilizer.

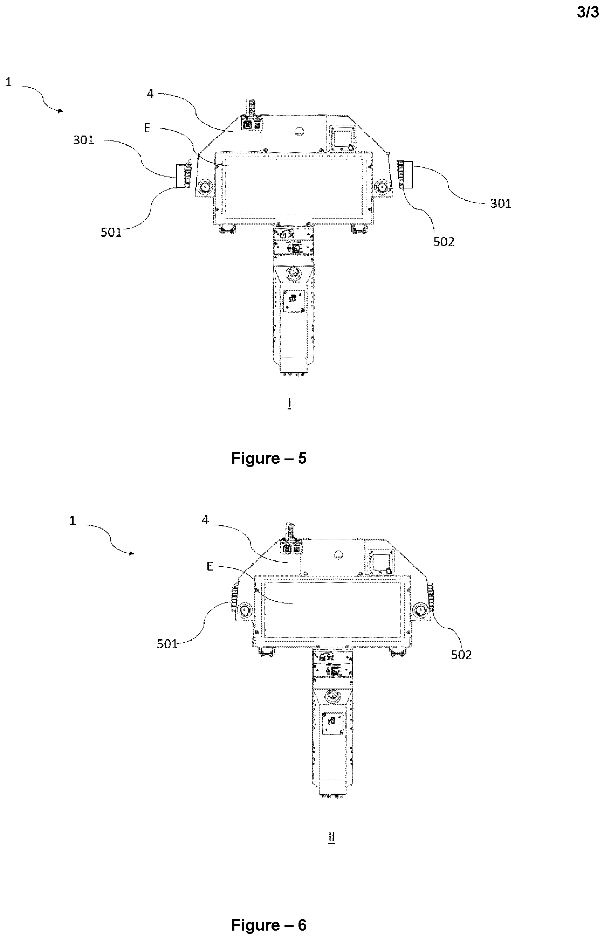

Figure 5- Opposite view of the load damping apparatus in the first situation (I).
Figure 6- Opposite view of the load damping apparatus in the second situation (II).

The parts in the figures are numbered one by one and the corresponding numbers are given below.
1. Load Damping Apparatus
2. Body
3. Cockpit
   301. Beam
4. Panel
5. Damper
   501.First Damper
   502.Second Damper
   511.Inclined Region
6. Fastener
7. Canopy
   701. Hinge
   702.Lock
(I) First Situation
(II) Second Situation
(A) Open Position
(K) Close Position
(E) Equipment
(Z) Floor

Load damping apparatus (1), comprising a body (2) located on the aircraft , a cockpit (3) in the form of a cabin on the body (2), in which the pilot is located, a panel (4) located in the cockpit (3), on which the avionics devices are positioned and which is accessible to the pilot, a plurality of beams (301) forming the side walls of the cockpit (3), arranged longitudinally opposite each other so that the cockpit (3) is located between them, at least one damper (5) located in the cockpit (3), damping the loads on the panel (4) in the cockpit (3).

The inventive load damping apparatus (1), comprising a damper (5) positioned between the panel (4) and the beams (301), damping the loads between the panel (4) and the beam (301), at least one fastener (6) for removably attaching the damper (5) to the beam (301) from its contact surface, a first situation (I) in which there is a distance between the damper (5) and the panel (4), a second situation (II) in which the panel (4) is subjected to a load and in contact with the damper (5), the panel (4) from the first situation (I) to the second situation (II) a damper (5) that dampens the loads on the panel (4) from the first situation (I) to the second situation (II) and prevents the panel (4) from contacting the beam (301), and in the second situation (II), provides the bearing of the panel (4) from the surface of the panel (4) facing the beam (301), thus dampening the loads that the panel (4) suffers only in the direction in which it extends along its length and providing lightness.

The aircraft has a body (2) with a cockpit (3) in which the pilot is located and the pilot directs the body (2). In the cockpit (3), there is a panel (4) on which the avionic devices and devices for controlling the aircraft are installed and on which the indicators are located, easily accessible by the pilot in the cockpit (3), preferably located in the almost central part of the cockpit (3) in the direction in which the cockpit (3) extends. There are multiple beams 301 forming both walls of the cockpit (3) opposite each other, which are part of the body (2) forming the walls of the cockpit (3). In the cockpit (3), there is at least one damper (5) which damps the vibration, lateral loads or gravitational loads experienced by the body (2) during flight.

A damper (5) is positioned between the beams (301) on both sides of the panel (4), between the beams (301) and both walls of the panel (4) on the axis along which the panel (4) extends, thereby damping the loads arising between the panel (4) and the beams (301). The damper (5) is only connected to the beam (301) by means of fasteners (6) on the surface facing the beam (301). The damper (5) is not connected to the panel (4). However, the damper (5) is positioned facing each other with the panel (4). There is a first situation (I) in which there is a small distance between the damper (5) and the panel (4), so that they are not in contact with each other. In the first situation (I), no load acts on the panel (4) or the beam (301). The panel (4) is subjected to a load during the flight of the body (2) and undergoes displacement. During this process, vibration occurs or the panel (4) is displaced by leaning against one of the beams (301) as a result of the body (2) tilting to the right or left. In this case, the panel (4) is subjected to load and displacement occurs and it moves towards the damper (5) in the direction in which it extends between the beams (301), approaching and coming into contact in the second situation (II). In the second situation (II) the distance between the damper (5) and the panel (4) disappears and they come into contact. The damper (5) only carries the lateral loads exerted by the panel (4) on the beams (301) due to the movement of the panel (4) in the direction in which it extends between the beams (301) in the second situation (II). This provides a lightweight damper (5) capable of damping only in one direction.

In one embodiment of the invention, the load damping apparatus (1) comprises a canopy (7) on the body (2), in a form capable of covering the cockpit (3), a closed position (K) wherein the canopy (7) is located above the cockpit (3), an open position (A) wherein the canopy (7) is located at a distance from the cockpit (3), at least one hinge (701) on the body (2) and on the side of the cockpit (3) relative to the direction in which the cockpit (3) extends along its length, allowing the canopy (7) to open and close on the cockpit (3) by rotating around the direction in which it is supported, and moving the canopy (7) between the open position (A) and the closed position (K), located on the body (2) next to the cockpit (3), a lock (702) for fixing the position of the canopy (7) in the closed position (K), a first damper (501) fixed on the beam (301) by the fastener (6) so as to be on the side of the beam (301) on which the lock (702) is located, a second damper (502) fixed on the beam (301) by the fastener (6) so as to be on the side of the beam (301) of the hinge (701), The first damper (501) comprises an inclined region (511) located on the part of the first damper (501) facing the canopy (7), which allows the canopy (7) to move in a user predetermined alignment with the canopy (7) by substantially contacting the canopy (7) when moving the canopy (7) from the open position (A) to the closed position (K) or from the closed position (K) to the open position (A). The canopy (7) on the body (2) closes the cockpit (3) in the closed position (K). The user moves the canopy (7) to the open position (A) by rotating the canopy (7) around the point where the hinge (701) on the body (2) is supported. The canopy (7) is fixed on the body (2) in the closed position (K) by means of the lock (702). There is a first damper (501) on the lock (702) part of the cockpit (3) and a second damper (502) on the hinge (701) part. In this way, the panel (4) is supported on both sides. The first damper (501) on the first damper (501), which acts as a guide to the path followed by the canopy (7) during the movement of the canopy (7) from the open position (A) to the closed position (K) or from the closed position (K) to the open position (A), supports the movement of the canopy (7) and ensures that it closes without hitting the beam (301).

In one embodiment of the invention, the load damping apparatus (1) comprises a floor (Z) forming the floor of the cockpit (3), which is located in the body (2), a plurality of equipment (E) positioned on the panel (4) in the direction in which the panel (4) extends outwardly from the floor (Z), a damper (5) fixed on the beam (301) between the beam (301) and the panel (4) in such a way that the equipment (E) and the panel (4) are opposite each other, thereby damping the loads on the beam (301) due to the weight of the equipment (E) when the panel (4) transitions from the first situation (I) to the second situation (II). The panel (4) is fixed only to the floor (Z) forming the base of the body (2), extending outwardly from the floor (Z). The panel (4) is not fixed to the beam (301). There is equipment (E) on the panel (4) and this equipment (E) places an additional load on the position of the panel (4). The displacement caused by the vibration of the panel (4) in the second situation (II) and when the body (2) is tilted sideways, additional loads are generated due to gravity in the second situation (II) and these loads are relatively high in the area where the equipment (E) is located. The damper (5) is positioned on the beam (301) relatively closer to the equipment (E), where the additional loads caused by the aforementioned equipment (E) occur. In this way, the loads caused by the equipment (E) are carried more effectively.

In one embodiment of the invention, the load damping apparatus (1) comprises an inclined region (511) which prevents the canopy (7) from hitting the panel (4) and which is inclined along the direction in which the damper (5) extends. In this way, the path along which the canopy (7) moves is supported by the inclined region (511), so that the canopy (7) closes smoothly without hitting the panel (4).

In one embodiment of the invention, the load damping apparatus (1) comprises a second damper (502) which, when the canopy (7) is placed on the cockpit (3), prevents the canopy (7) from applying loads to the beam (301) and carries the loads in such a way as to prevent the transfer of the loads incurred by the canopy (7) to the beam (301), and is form-compatible with the outer wall form of the canopy (7). In this way, additional loads are prevented on the beam (301) during the movement of the canopy (7).

In one embodiment of the invention, the load damping apparatus (1) comprises a panel (4) fixed on the floor (Z), a first damper (501) and a second damper (502) which act as a retainer for loads experienced by the panel (4) fixed on the floor (Z) in the second situation (II), thereby preventing the panel (4) from striking the beam (301). The vibration experienced by the panel (4) fixed on the floor (Z) in the second situation (II) or the loads occurring in the direction in which it extends between the beams (301) are damped by the first damper (501) and the second damper (502) acting as lugs to the panel (4). In this way, only in the second situation (II), the panel (4) and the first damper (501) and the second damper (502) are in contact, providing a lighter damper (5).

In one embodiment of the invention, the load damping apparatus (1) comprises a first damper (501) and a second damper (502) which are arranged in a repeating array to form a lattice structure, thereby preventing the formation of internal cracks. The internal structure of the damper (5) has a geometry with channels forming a lattice structure. In this way, it is ensured that the damper (5) is both lightweight and carries an effective load by minimizing the formation of internal cracks.

In one embodiment of the invention, the load damping apparatus (1) comprises a first damper (501) and a second damper (502) made of rubber material. In this way, it is ensured that the damper (5) acts as damping in a lightweight and durable manner.

In one embodiment of the invention, the load damping apparatus (1) comprises a first damper (501) and a second damper (502) produced by additive manufacturing. In this way, the damper (5) can be produced easily and inexpensively.

In one embodiment of the invention, the load damping apparatus (1) comprises a beam (301), preferably a beam with a connector.

## Claims

1. A load damping apparatus (1), **comprising** a body (2) on the aircraft, a cockpit (3) in the form of a cabin on the body (2), in which the pilot is located, a panel (4) located in the cockpit (3), on which the avionics devices are positioned and which is accessible to the pilot, a plurality of beams (301) forming the side walls of the cockpit (3), arranged longitudinally opposite each other so that the cockpit (3) is located between them, at least one damper (5) located in the cockpit (3), damping the loads on the panel (4) in the cockpit (3) **is characterized by** damper (5) positioned between the panel (4) and the beams (301), damping the loads between the panel (4) and the beam (301), at least one fastening (6) which allows the damper (5) to be removably attached to the surface of the beam 301 where it contacts the beam (301), a first situation (I) where there is a distance between the damper (5) and the panel (4), a second situation (II) where the panel (4) is subjected to load and in contact with the damper (5), a damper (5) which prevents the panel (4) from contacting the beam (301) by damping the loads on the panel (4) from the first situation (I) to the second situation (II), and which, in the second situation (II), provides bearing of the panel (4) from the surface of the panel (4) facing the beam (301), thereby damping the loads that the panel (4) suffers only in the direction in which it extends along its length and providing lightness.

2. A load damping apparatus (1) as in claim 1, **characterized by** a canopy (7) on the body (2), which can cover the cockpit (3), a closed position (K) where the canopy (7) is located above the cockpit (3), an open position (A) with the canopy (7) located at a distance from the cockpit (3), at least one hinge (701) located on the body (2) and on its side relative to the direction in which the cockpit (3) extends along its length, allowing the canopy (7) to open and close on the cockpit (3) by rotating around the direction in which it is supported, and moving the canopy (7) between the open position (A) and the closed position (K), a lock (702) located on the body (2) next to the cockpit (3), which allows the position of the canopy (7) to be fixed in the closed position (K), a first damper (501) fixed on the beam (301) by the fastener (6) so as to be on the side of the beam (301) on which the lock (702) is located, a second damper (502) fixed on the beam (301) by the fastener (6) so that it is on the hinge (701) side of the beam (301), the first damper (501) is provided on the part facing the canopy (7), with an inclined region (511) which, when moving the canopy (7) from the open position (A) to the closed position (K) or from the closed position (K) to the open position (A), substantially contacts the canopy (7) and allows the canopy (7) to move in alignment predetermined by the user.

3. A load damping apparatus (1) as in claim 1 or claim 2, **characterized by** a floor (Z) located in the body (2), forming the floor of the cockpit (3), the panel (4) comprises the multiple equipment (E) positioned on the panel (4) in the direction in which the panel (4) extends outwardly from the floor (Z) is fixed on the beam (301) so that the equipment (E) is opposite to the beam (301) between the beam (301) and the panel (4), and **characterized in that** the damper (5) damps the loads on the beam (301) due to the weight of the equipment (E) when the panel (4) transitions from the first situation (I) to the second situation (II).

4. A load damping apparatus (1) as in claim 2, **characterized by** an inclined region (511), which prevents the canopy (7) from striking the panel (4), has a sloping form along the direction in which the damper (5) extends.

5. A load damping apparatus (1) as in claim 2, **characterized by** a second damper (502) form-matched to the form of the outer wall of the canopy (7), **characterized in that** the second damper (502) is form-matched to the form of the outer wall of the canopy (7), which, when placed on the cockpit (3) of the canopy (7), prevents the canopy (7) from applying loads to the beam (301), and carries the loads so as to prevent the loads incurred by the canopy (7) from being transferred to the beam (301).

6. A load damping apparatus (1) as in any one of claims 3-5, **characterized by** a panel (4) fixed on the floor (Z), a first damper (501) and a second damper (502) acting as a retainer for loads experienced by the panel (4) fixed on the floor (Z) in the second situation (II), thereby preventing the panel (4) from striking the beam (301).

7. A load damping apparatus (1) as claimed in any one of claims 2-6, **characterized by** a first damper (501) and a second damper (502) arranged in a repeating array to form a lattice structure, thereby preventing the formation of internal cracks.

8. A load damping apparatus (1) as in any one of claims 2-7, **characterized by** a first damper (501) and a second damper (502) made of a rubber material.

9. A load damping apparatus (1) as in any one of claims 2-8, **characterized by** a first damper (501) and a second damper (502) manufactured by additive manufacturing.

10. A load damping apparatus (1) as in any one of the preceding claims, **characterized by** a beam (301) is preferably longeron.
